# EUROPÄISCHE PATENTSCHRIFT

(11) **EP 2 128 973 B1**
(45) Veröffentlichungstag und Bekanntmachung des Hinweises auf die Patenterteilung: **18.05.2011**
(21) Anmeldenummer: 08156952.7
(22) Anmeldetag: 27.05.2008
(51) Int. Cl.: H02P 5/46, H02J 3/38, H02J 3/46, H04L 12/42, H04L 12/433

(54) **Startvorrichtung für mindestens zwei Synchronmaschinen**
Starting device for at least two synchronous machines
Dispositif de démarrage pour au moins deux machines synchrones

(43) Veröffentlichungstag der Anmeldung: 02.12.2009
(73) Patentinhaber: ABB Schweiz AG, 5400 Baden (CH)
(72) Erfinder: Keller, Tobias, CH-5412, Gebenstorf (CH); Wieser, Rudolf, CH-5404, Baden-Dättwil (CH)
(74) Vertreter: ABB Patent Attorneys

(56) Entgegenhaltungen:
- EP-A- 1 798 836
- JP-A- 5 003 632
- JP-A- 2003 259 693
- JP-A- 2007 166 727
- US-A1- 2006 007 927

## Beschreibung

### Technisches Gebiet

Die Erfindung bezieht sich auf das Gebiet der Synchronmaschinen. Sie geht aus von einer Startvorrichtung für mindestens zwei Synchronmaschinen gemäss dem Oberbegriff des unabhängigen Anspruchs.

### Stand der Technik

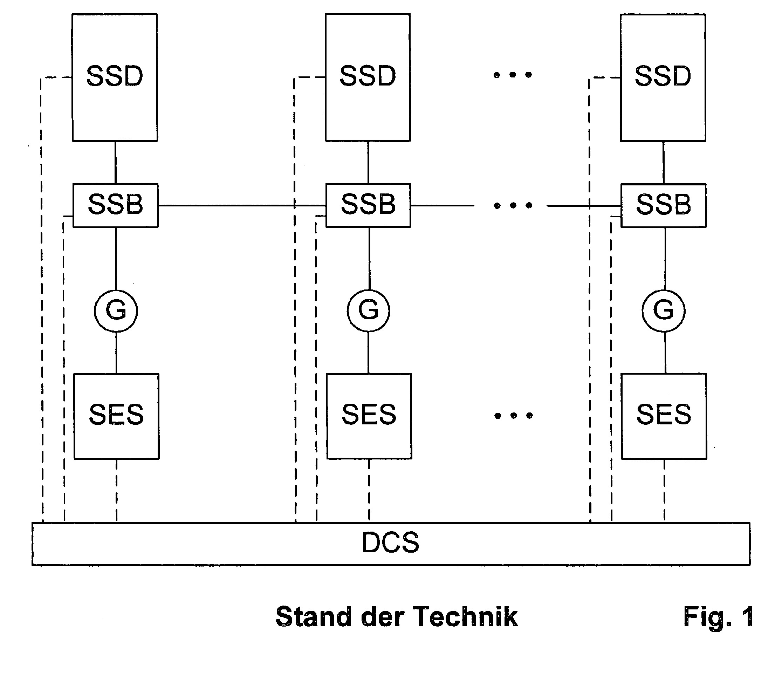

Synchronmaschinen werden heute in einer Vielzahl von Anwendungen eingesetzt. Beispielsweise werden bei einem Gasturbinenkraftwerk mit mehreren Gasturbinen und mit den Gasturbinen verbundene Generatoren, welche als Synchronmaschinen ausgebildet sind, die Synchronmaschinen zum Start der Gasturbinen verwendet. Dafür wird typischerweise eine Startvorrichtung eingesetzt, die die Synchronmaschinen und damit auch die Gasturbinen startet. Eine heute gängige Startvorrichtung für mindestens zwei Synchronmaschinen ist in Fig. 1 gezeigt. Darin weist die Startvorrichtung eine für jede Synchronmaschine G vorgesehene und der jeweiligen Synchronmaschine G zugeordnete Erregereinheit SES auf, wobei die jeweilige Erregereinheit SES mit der Erregerwicklung der zugehörigen Synchronmaschine G verbunden ist und der Speisung der Erregerwicklung dient. Weiter ist eine übergeordnete Steuereinheit DCS vorgesehen, wobei die übergeordnete Steuereinheit DCS über eine Kommunikationsverbindung mit jeder Erregereinheit SES verbunden ist. Die Kommunikationsverbindung, wie auch sämtliche weiteren, noch erwähnten Kommunikationsverbindungen, sind in Fig. 1 gestrichelt dargestellt. Ferner ist mindestens eine Statorspeiseeinheit SSD und eine, für jede Statorspeiseeinheit SSD vorgesehene und der jeweilige Statorspeiseeinheit SSD zugeordneten Schalteinrichtung SSB, wobei die jeweilige Schalteinrichtung SSB mit der zugehörigen Statorspeiseeinheit SSD verbindbar ist, die jeweilige Schalteinrichtung SSB mit mindestens einer Synchronmaschine G verbindbar ist und die Schalteinrichtungen SSB im Falle mehrerer Schalteinrichtungen SSB miteinander verbindbar sind. Die übergeordnete Steuereinheit DCS ist über eine Kommunikationsverbindung mit jeder Schalteinrichtung SSB verbunden. Darüber hinaus ist die übergeordnete Steuereinheit DCS über eine Kommunikationsverbindung mit jeder Statorspeiseeinheit SSD.

Soll nun eine Synchronmaschine G mittels der bekannten Startvorrichtung nach Fig. 1 gestartet werden, gibt die übergeordnete Steuereinheit DCS über die Kommunikationsverbindung ein entsprechendes Signal an die Erregereinheit SES, welche daraufhin eine Erregerspannung an die Erregerwicklung der zustartenden Synchronmaschine G anlegt. Zudem gibt die übergeordnete Steuereinheit DCS über die Kommunikationsverbindung ein entsprechendes Signal an eine oder mehrere Schalteinrichtungen SSB, woraufhin eine Statorspeiseeinheit SSD, welche die übergeordnete Steuereinheit DCS über die Kommunikationsverbindung mittels eines Signals auswählt, mit der Statorwicklung der zu startenden Synchronmaschine G verbunden wird, wobei die Statorspeiseeinheit SSD eine Speisespannung an die Statorwicklung anlegt und die gewünschte Synchronmaschine G dann startet.

Problematisch bei der vorstehend beschriebenen Starvorrichtung gemäss Fig. 1 ist, dass von der übergeordneten Steuereinheit DCS zu jeder Erregereinheit SES, zu jeder Schalteinrichtung SSB und zu jeder Statorspeiseeinheit SSD jeweils eine Kommunikationsverbindung besteht. Typischerweise ist die übergeordnete Steuereinheit DCS in einem zentralen Leitstand integriert und damit weit weg von den Synchronmaschinen G, von den Erregereinheiten SES, von den Schalteinrichtungen SSB und von den Statorspeiseeinheiten SSD, so dass grosse Distanzen für die Kommunikationsverbindungen überwunden werden müssen, wodurch die Startvorrichtung aufwendig zu realisieren und zu warten ist und die Störanfälligkeit ansteigt. Ein weiterer Störanfälligkeitsfaktor der vorstehend beschriebenen Startvorrichtung gemäss Fig. 1 stellt die Tatsache dar, dass die übergeordnete Steuereinheit DCS nahezu sämtliche Steueraufgaben für den Startprozess besitzt und der übergeordneten Steuereinheit DCS damit nahezu alle zentralen Steuerfunktionen zukommen. Sind dann aber eine oder mehrere Kommunikationsverbindungen der übergeordneten Steuereinheit DCS beispielsweise fehlerbedingt unterbrochen, ist ein Betrieb der Startvorrichtung entweder gar nicht mehr oder nicht mehr sinnvoll möglich, wobei die Starvorrichtung dann nicht mehr zur Verfügung steht.

In der JP 05 0036 32 A ist eine Startvorrichtung für zwei Synchronmaschinen angegeben, die eine für jede Synchronmaschine vorgesehene und der jeweiligen Synchronmaschine zugeordnete Erregereinheit umfasst, wobei die jeweilige Erregereinheit mit der Erregerwicklung der zugehörigen Synchronmaschine verbunden ist. Zudem ist eine nicht übergeordnete Steuereinheit, nämlich zwei Steuereinheiten vorgesehen, wobei jede Steuereinheit über eine Kommunikationsverbindung mit einer zugeordneten Erregereinheit verbunden ist. Die Steuereinheiten sind über eine Kommunikationsverbindung miteinander verbunden. Ferner umfasst die Startvorrichtung der JP 05 0036 32 A eine Statorspeiseeinheit und eine für jede Statorspeiseeinheit vorgesehene und der jeweiligen Statorspeiseeinheit zugeordnete Schalteinrichtung, wobei die jeweilige Schalteinrichtung mit der zugehörigen Statorspeiseeinheit verbindbar ist und die jeweilige Schalteinrichtung mit einer Synchronmaschine verbindbar ist.

Desweiteren ist in der US 2006/0007927 A1 ein gängigen Aufbau einer Token-Ring-Kommunikation für ein Regelungssystem eines Atomkraftwerkes angegeben.

### Darstellung der Erfindung

Aufgabe der Erfindung ist es deshalb, eine Startvorrichtung für mindestens zwei Synchronmaschlnen anzugeben, welche sehr einfach zu realisieren und zu warten ist und eine geringe Störanfälligkeit aufweist, Diese Aufgabe wird durch die Merkmale des Anspruchs 1 gelöst. In den abhängigen Ansprüchen sind vorteilhafte Weiterbildungen der Erfindung angegeben.

Die erfindungsgemässe Startvorrichtung für mindestens zwei Synchronmaschinen weist eine für jede Synchronmaschine vorgesehene und der jeweiligen Synchronmaschine zugeordneten Erregereinheit auf, wobei die jeweilige Erregereinheit mit der Erregerwicklung der zugehörigen Synchronmaschine verbunden ist. Ferner ist eine übergeordnete Steuereinheit vorgesehen, wobei die übergeordnete Steuereinheit über eine Kommunikationsverbindung mit jeder Erregereinheit verbunden ist. Desweiteren umfasst die erfindungsgemässe Startvorrichtung mindestens eine Statorspeiseeinheit und eine für jede Statorspeiseeinheit vorgesehene und der jeweiligen Statorspeiseeinheit zugeordnete Schalteinrichtung, wobei die Jeweilige Schalteinrichtung mit der zugehörigen Statorspeiseeinheit verbindbar ist, die jeweilige Schalteinrichtung mit mindestens einer Synchronmaschine verbindbar ist und die Schalteinrichtungen im Falle mehrerer Schalteinrichtungen miteinander verbindbar sind. Erfindungsgemäss sind die Erregereinheiten nun über eine Ringkommunikationsverbindung miteinander verbunden, jede Statorspeiseeinheit ist zudem mit dieser Ringkommunikationsverbindung verbunden und jede Statorspeiseeinheit Ist über eine Kommunikationsverbindung mit der zugehörigen Schalteinrichtung verbunden. Die Erregereinheiten, welche den Statorspeiseeinheiten zugeordnet sind und damit insbesondere der Anzahl der Statorspeiseeinheiten entsprechen, sind ferner jeweils über eine Kommunikationsverbindung mit einer Schalteinrichtung verbunden.

Beim Start einer Synchronmaschine gibt die übergeordnete Steuereinheit über die Kommunikationsverbindung ein entsprechendes Signal an die zugehörige Erregereinheit, welche daraufhin eine Erregerspannung an die Erregerwicklung der zustartenden Synchronmaschine anlegt. Über die Ringkommunikationsverbindung wählt die zugehörige Erregereinheit mittels eines Signals eine Statorspeiseeinheit aus, mittels welcher dann eine Statorspannung an die zu startende Synchronmaschine angelegt wird. Damit die ausgewählte Statorspeiseeinheit die Statorspannung an die zu startende Synchronmaschine anlegen kann, werden die Erregereinheiten, welche den Statorspeiseeinheiten zugeordnet sind, von der zu der startenden Synchronmaschine zugehörigen Erregereinheit über die Ringkommunikationsverbindung mittels eines Signals angesprochen. Auf dieses Signal hin schickt dann jede dieser Erregereinheiten ein Signal über die Kommunikationsverbindung zu der jeweiligen Schalteinrichtung, woraufhin die für die Verbindung der ausgewählten Statorspeiseeinheit zu der zu startenden Synchronmaschine benötigte oder benötigten Schalteinrichtungen entsprechend geschaltet werden, um die Verbindung herzustellen. Ist die Statorspeiseeinheit ausgewählt, welche nur eine Schalteinrichtung zur Verbindung zu der zu startenden Synchronmaschine benötigt, so schickt diese Starteinrichtung über die Kommunikationsverbindung ein entsprechendes Signal direkt zu der Schalteinrichtung, um die Verbindung herzustellen.

Insgesamt ist die erfindungsgemässe Startvorrichtung aufgrund ihres Aufbaus sehr einfach zu realisieren und zu warten, da lediglich die übergeordnete Steuereinheit, typischerweise in einem zentralen Leitstand integriert, weit weg von den restlichen Komponenten der erfindungsgemässen Startvorrichtung sind und deshalb nur sehr wenige grosse Distanzen für die Kommunikationsverbindungen zu den einzelnen Erregereinheiten überwunden werden müssen. Die Störanfälligkeit sinkt dadurch ebenfalls und die Verfügbarkeit der Starvorrichtung steigt an. Zudem kommen der übergeordneten Steuereinheit weit weniger Steueraufgaben für den Startprozess zu, welche nun zu einem grossen Teil durch die einzelnen Erregereinheiten übernommen werden, wodurch die Störanfälligkeit weiter gesenkt und die Verfügbarkeit weiter erhöht werden kann.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform einer Startvorrichtung nach dem Stand der Technik, und
- Fig. 2: eine Ausführungsform einer Startvorrichtung nach der Erfindung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

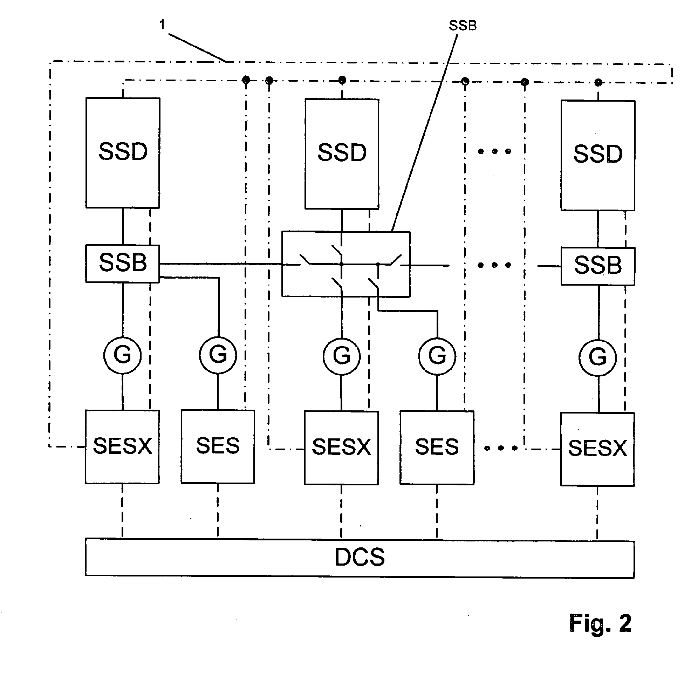

In Fig. 1 ist die bereits eingangs detailliert beschriebene Startvorrichtung nach dem Stand der Technik dargestellt. Fig. 2 zeigt dagegen eine Ausführungsform einer Startvorrichtung für mindestens zwei Synchronmaschinen G nach der Erfindung. Gemäss Fig. 2 umfasst die Startvorrichtung eine für jede Synchronmaschine G vorgesehene und der jeweiligen Synchronmaschine G zugeordneten Erregereinheit SES, SESX auf, wobei die jeweilige Erregereinheit SES, SESX mit der Erregerwicklung der zugehörigen Synchronmaschine G verbunden ist. Ferner ist eine übergeordnete Steuereinheit DCS vorgesehen, wobei die übergeordnete Steuereinheit DCS über eine Kommunikationsverbindung mit jeder Erregereinheit SES, SESX verbunden ist. Es sei erwähnt, dass die vorstehend erwähnte Kommunikationsverbindung sowie die nachfolgend noch detailliert besprochenen weiteren Kommunikationsverbindungen als gestrichelte Linien in Fig. 2 dargestellt sind. Desweiteren umfasst die erfindungsgemässe Startvorrichtung mindestens eine Statorspeiseeinheit SSD und eine für jede Statorspeiseeinheit SSD vorgesehene und der jeweiligen Statorspeiseeinheit SSD zugeordnete Schalteinrichtung SSB, wobei die jeweilige Schalteinrichtung SSB mit der zugehörigen Statorspeiseeinheit SSD verbindbar ist. Die jeweilige Schalteinrichtung SSB ist zudem mit mindestens einer Synchronmaschine G verbindbar. Im Falle mehrerer Schalteinrichtungen SSB, wie beispielhaft in Fig. 2 gezeigt, sind die Schalteinrichtungen SSB miteinander verbindbar. In Fig. 2 ist die zweite Schalteinrichtung SSB von links aus gesehen mittels Schaltern beispielhaft realisiert, wobei jede für die Funktionalität geeignete Realisierung mit geeigneten Schaltern jeglicher Art denkbar ist. Nach der Erfindung sind die Erregereinheiten SES, SESX nun über eine Ringkommunikationsverbindung 1 miteinander verbunden, jede Statorspeiseeinheit SSD ist zudem mit dieser Ringkommunikationsverbindung verbunden und jede Statorspeiseeinheit SSD ist über eine Kommunikationsverbindung mit der zugehörigen Schalteinrichtung SSB verbunden. Es sei erwähnt, dass die vorstehend erwähnte Ringkommunikationsverbindung 1 als strich-punktierte Linien in Fig. 2 dargestellt ist. Die Erregereinheiten SESX, welche insbesondere der Anzahl der Statorspeiseeinheiten SSD entsprechen, sind ferner jeweils über eine Kommunikationsverbindung mit einer Schalteinrichtung verbunden. Diese Erregereinheiten SESX sind dann den Statorspeiseeinheiten SSD zugeordnet.

Beim Start beispielsweise der ersten Synchronmaschine G in Fig. 2 von rechst aus gesehen gibt die übergeordnete Steuereinheit DCS über die Kommunikationsverbindung ein entsprechendes Signal an die zugehörige Erregereinheit SESX, d.h. in Fig. 2 an die erste Erregereinheit SESX von rechts aus gesehen, welche daraufhin eine Erregerspannung an die Erregerwicklung der zustartenden Synchronmaschine G anlegt. Über die Ringkommunikationsverbindung wählt die zugehörige Erregereinheit SESX dann mittels eines Signals eine Statorspeiseeinheit SSD aus, beispielsweise in Fig. 2 die erste Statorspeiseeinheit SSD von links aus gesehen, mittels welcher dann eine Statorspannung an die zu startende Synchronmaschine G angelegt wird. Damit die ausgewählte Statorspeiseeinheit SSD die Statorspannung an die zu startende Synchronmaschine G anlegen kann, werden die Erregereinheiten SESX, welche den Statorspeiseeinheiten SSD zugeordnet sind, von der zu der startenden Synchronmaschine G zugehörigen Erregereinheit SESX über die Ringkommunikationsverbindung mittels eines Signals angesprochen. Auf dieses Signal hin schickt dann jede dieser Erregereinheiten SESX ein Signal über die Kommunikationsverbindung zu der jeweiligen Schalteinrichtung SSB, woraufhin die für die Verbindung der ausgewählten Statorspeiseeinheit SSD zu der zu startenden Synchronmaschine benötigte oder benötigten Schalteinrichtungen entsprechend geschaltet werden, um die Verbindung herzustellen. Im Beispielfall wären dies dann sämtliche Schalteinrichtungen SSB, um eine Verbindung in Fig. 2 von der ersten Statorspeiseeinheit SSD von links aus gesehen zu der ersten Synchronmaschine G von rechst aus gesehen herzustellen. Alternativ wäre es auch denkbar, dass auf das von der zu der startenden Synchronmaschine G zugehörigen Erregereinheit SESX auf die Ringkommunikationsverbindung gegebene Signal nun die Statorspeiseeinheiten SSD angesprochen werden, welche dann über die Kommunikationsverbindungen mittels eines Signals die jeweiligen Schalteinrichtungen SSB ansprechen, die dann daraufhin schlussendlich die gewünschte Verbindung zwischen ausgewählter Statorspeiseeinheit SSD und zu startender Synchronmaschine G herstellen.

Ist die Statorspeiseeinheit SSD ausgewählt, welche nur eine Schalteinrichtung SSB zur Verbindung zu der zu startenden Synchronmaschine benötigt G, so schickt diese Starteinrichtung SSD über die Kommunikationsverbindung ein entsprechendes Signal direkt zu der Schalteinrichtung SSB, um die Verbindung herzustellen. Im Beispielfall hiesse das, dass die in Fig. 2 erste Statorspeiseeinheit SSD von rechts aus gesehen ausgewählt werden würde und dann über die Kommunikationsverbindung ein entsprechendes Signal an die erste Schalteinrichtung SSB von rechts aus gesehen senden würde, um eine Verbindung von der ausgewählten Statorspeiseeinheit SSD zu der zu startenden ersten Synchronmaschine G von rechts aus gesehen herzustellen.

Selbstverständlich ist es mittels der erfindungsgemässen Starvorrichtung auch möglich, mehrere Synchronmaschinen G gleichzeitig oder nacheinander zu starten, wobei dann jeder Startvorgang in ähnlicher Weise, wie vorstehend beispielhaft beschrieben abläuft.

Die erfindungsgemässe Startvorrichtung ist wegen ihres Aufbaus äusserst einfach zu realisieren und zu warten, da lediglich die übergeordnete Steuereinheit DCS, typischerweise in einem zentralen Leitstand integriert, weit weg von den restlichen Komponenten (Erregereinheiten SES, SESX, Statorspeiseeinheiten SSD, Schalteinrichtungen SSB) sind und deshalb nur sehr wenige grosse Distanzen für die Kommunikationsverbindungen zu den einzelnen Erregereinheiten SES, SESX überwunden werden müssen. Die Störanfälligkeit sinkt dadurch ebenfalls erheblich und die Verfügbarkeit der Starvorrichtung steigt an. Ausserdem kommen der übergeordneten Steuereinheit DCS weit weniger Steueraufgaben für den Startprozess zu, welche nun zu einem grossen Teil durch die einzelnen Erregereinheiten SES, SESX übernommen werden, wodurch die Störanfälligkeit weiter gesenkt und die Verfügbarkeit weiter erhöht werden kann.

Jede Erregereinheit SES, welche nicht über eine Kommunikationsverbindung mit einer Schalteinrichtung SSB verbunden ist, weist eine Steuerlogik auf, wobei die Steuerlogik der jeweiligen Erregereinheit SES mit der Ringkommunikationsverbindung 1 verbunden ist und mit der übergeordneten Steuereinheit DCS über die Kommunikationsverbindung verbunden ist. Die jeweilige Steuerlogik dient mit Vorteil zum Empfang und Senden von Signalen zu und von der übergeordneten Steuereinheit DCS und zu und von der Ringkommunikationsverbindung 1, welche insbesondere für den Startvorgang einer oder mehrerer Synchronmaschinen G, wie vorstehend beispielhaft beschrieben, notwendig sind.

Die Erregereinheiten SESX, welche jeweils über eine Kommunikationsverbindung mit einer Schalteinrichtung SSB verbunden sind, weisen ebenfalls jeweils eine Steuerlogik auf, wobei die Steuerlogik der jeweiligen Erregereinheit SESX mit der Ringkommunikationsverbindung 1 verbunden ist und mit der übergeordneten Steuereinheit DCS über die Kommunikationsverbindung verbunden ist. Auch diese jeweilige Steuerlogik dient mit Vorteil zum Empfang und Senden von Signalen zu und von der übergeordneten Steuereinheit DCS und zu und von der Ringkommunikationsverbindung 1, welche insbesondere für den Startvorgang einer oder mehrerer Synchronmaschinen G, wie vorstehend beispielhaft beschrieben, notwendig sind. Desweiteren weist jede Schalteinrichtung SSB eine Steuerlogik auf, wobei die Steuerlogik der jeweiligen Schalteinrichtung SSB mit der Steuerlogik der jeweiligen Erregereinheit SESX über die Kommunikationsverbindung verbunden ist. Die Steuerlogik der jeweiligen Schalteinrichtung SSB dient vorteilhaft zum Empfang und Senden von Signalen zu und von der jeweiligen Erregereinheit SESX, welche insbesondere auch für den Startvorgang einer oder mehrerer Synchronmaschinen G, wie vorstehend beispielhaft beschrieben, notwendig sind.

Ferner weist jede Statorspeiseeinheit SSD eine Steuerlogik auf, wobei die Steuerlogik der jeweiligen Statorspeiseeinheit SSD mit der Ringkommunikationsverbindung 1 verbunden ist. Die Steuerlogik der jeweiligen Schalteinrichtung SSB ist mit der Steuerlogik der zugehörigen Statorspeiseeinheit SSD über die Kommunikationsverbindung verbunden ist. Demnach dient die Steuerlogik der jeweiligen Schalteinrichtung SSB zudem auch zum Empfang und Senden von Signalen zu und von der zughörigen Statorspeiseeinheit SSD und die Steuerlogik der jeweiligen Statorspeiseeinheit SSD dient mit Vorteil zum Empfang und Senden von Signalen zu und von der der jeweiligen Schalteinrichtung SSB und zu und von der Ringkommunikationsverbindung 1. Darüber hinaus dient die Steuerlogik der jeweiligen Statorspeiseeinheit SSD auch zum Speichern und Auswerten von Daten, welche für die Auswahl der Statorspeiseeinheit SSD durch die entsprechende Erregereinheit SES, SESX benötigt werden.

### Bezugszeichenliste

- 1: Ringkommunikationsverbindung
- G: Synchronmaschine
- SES, SESX: Erregereinheit
- DCS: übergeordnete Steuereinheit
- SES: Erregereinheit
- SBB: Schalteinrichtung
- SSD: Statorspeiseeinheit

## Patentansprüche

1. Startvorrichtung für mindestens zwei Synchronmaschinen (G)
mit einer für jede Synchronmaschine (G) vorgesehenen und der jeweiligen Synchronmaschine (G) zugeordneten Erregereinheit (SES, SESX), wobei die jeweilige Erregereinheit (SES, SESX) mit der Erregerwicklung der zugehörigen Synchronmaschine (G) verbunden ist,
mit einer übergeordneten Steuereinheit (DCS), wobei die übergeordnete Steuereinheit (DCS) über eine Kommunikationsverbindung mit jeder Erregereinheit (SES, SESX) verbunden ist,
mit mindestens einer Statorspeiseeinheit (SSD) und einer für jede Statorspeiseeinheit (SSD) vorgesehenen und der jeweiligen Statorspeiseeinheit (SSD) zugeordneten Schalteinrichtung (SSB), wobei die jeweilige Schalteinrichtung (SSB) mit der zugehörigen Statorspeiseeinheit (SSD) verbindbar ist, die jeweilige Schalteinrichtung (SSB) mit mindestens einer Synchronmaschine (G) verbindbar ist und die Schalteinrichtungen (SSB) im Falle mehrerer Schalteinrichtungen (SSB) miteinander verbindbar sind, **dadurch gekennzeichnet,**
**dass** die Erregereinheiten (SES, SESX) über eine Ringkommunikationsverbindung (1) miteinander verbunden sind,
**dass** jede Statorspeiseeinheit (SSD) mit der Ringkommunikationsverbindung (1) verbunden ist,
**dass** jede Statorspeiseeinheit (SSD) über eine Kommunikationsverbindung mit der zugehörigen Schalteinrichtung (SSB) verbunden ist, und
**dass** die Erregereinheiten (SESX), welche den Statorspeiseeinheiten (SSD) zugeordnet sind, jeweils über eine Kommunikationsverbindung mit einer Schalteinrichtung (SSB) verbunden sind.

2. Startvorrichtung nach Anspruch 1, **dadurch gekennzeichnet, dass** jede Erregereinheit (SES), welche nicht über eine Kommunikationsverbindung mit einer Schalteinrichtung (SSB) verbunden ist, eine Steuerlogik aufweist, wobei die Steuerlogik der jeweiligen Erregereinheit (SES) mit der Ringkommunikationsverbindung (1) verbunden ist und mit der übergeordneten Steuereinheit (DCS) über die Kommunikationsverbindung verbunden ist.

3. Startvorrichtung nach Anspruch 1 oder 2, **dadurch gekennzeichnet, dass** die Erregereinheiten (SESX), welche jeweils über eine Kommunikationsverbindung mit einer Schalteinrichtung (SSB) verbunden sind, jeweils eine Steuerlogik aufweisen, wobei die Steuerlogik der jeweiligen Erregereinheit (SESX) mit der Ringkommunikationsverbindung (1) verbunden ist und mit der übergeordneten Steuereinheit (DCS) über die Kommunikationsverbindung verbunden ist, und
dass jede Schalteinrichtung (SSB) eine Steuerlogik aufweist, wobei die Steuerlogik der jeweiligen Schalteinrichtung (SSB) mit der Steuerlogik der jeweiligen Erregereinheit (SESX) über die Kommunikationsverbindung verbunden ist.

4. Startvorrichtung nach Anspruch 3, **dadurch gekennzeichnet, dass** jede Statorspeiseeinheit (SSD) eine Steuerlogik aufweist, wobei die Steuerlogik der jeweiligen Statorspeiseeinheit (SSD) mit der Ringkommunikationsverbindung (1) verbunden ist, und
dass die Steuerlogik der jeweiligen Schalteinrichtung (SSB) mit der Steuerlogik der zughörigen Statorspeiseeinheit (SSD) über die Kommunikationsverbindung verbunden ist.

## Claims

1. A starting apparatus for at least two synchronous machines (G) having an exciter unit (SES, SESX) which is provided for each synchronous machine (G) and is associated with the respective synchronous machine (G), with the respective exciter unit (SES, SESX) being connected to the field winding of the associated synchronous machine (G),
having a superordinate control unit (DCS), with the superordinate control unit (DCS) being connected via a communication link to each exciter unit (SES, SESX),
having at least one stator feed unit (SSD) and one switching device (SSB), which is provided for each stator feed unit (SSD) and is associated with the respective stator feed unit (SSD), in which case the respective switching device (SSB) can be connected to the associated stator feed unit (SSD), the respective switching device (SSB) can be connected to at least one synchronous machine (G), and the switching devices (SSB) can be connected to one another when there are a plurality of switching devices (SSB),
**characterized**
**in that** the exciter units (SES, SESX) are connected to one another via a ring communication link (1),
**in that** each stator feed unit (SSD) is connected to the ring communication link (1),
**in that** each stator feed unit (SSD) is connected via a communication link to the associated switching device (SSB), and
**in that** the exciter units (SESX) which are associated with the stator feed units (SSD) are each connected via a communication link to a switching device (SSB).

2. The starting apparatus as claimed in claim 1, **characterized in that** each exciter unit (SES) which is not connected via a communication link to a switching device (SSB) has control logic, with the control logic of the respective exciter unit (SES) being connected to the ring communication link (1), and being connected to the superordinate control unit (DCS) via the communication link.

3. The starting apparatus as claimed in claim 1 or 2, **characterized in that** the exciter units (SESX) which are each connected via a communication link to a switching device (SSB) each have control logic, with the control logic of the respective exciter unit (SESX) being connected to the ring communication link (1), and being connected to the superordinate control unit (DCS) via the communication link, and
**in that** each switching device (SSB) has control logic, with the control logic of the respective switching device (SSB) being connected to the control logic of the respective exciter unit (SESX) via the communication link.

4. The starting apparatus as claimed in claim 3, **characterized in that** each stator feed unit (SSD) has control logic, with the control logic of the respective stator feed unit (SSD) being connected to the ring communication link (1), and **in that** the control logic of the respective switching device (SSB) is connected to the control logic of the associated stator feed unit (SSD) via the communication link.

## Revendications

1. Dispositif de démarrage pour au moins deux machines synchrones (G),
comprenant une unité d'excitation (SES, SESX) prévue pour chaque machine synchrone (G) et associée à la machine synchrone (G) respective, l'unité d'excitation (SES, SESX) respective étant reliée à l'enroulement excitateur de la machine synchrone (G) associée, comprenant une unité de commande de supervision (DCS), l'unité de commande de supervision (DCS) étant reliée à chaque unité d'excitation (SES, SESX) par le biais d'une liaison de communication,
comprenant au moins une unité d'alimentation de stator (SSD) et un dispositif de commutation (SSB) prévu pour chaque unité d'alimentation de stator (SSD) et associé à l'unité d'alimentation de stator (SSD) respective, le dispositif de commutation (SSB) respectif pouvant être relié avec l'unité d'alimentation de stator (SSD) associée, le dispositif de commutation (SSB) respectif pouvant être relié avec au moins une machine synchrone (G) et les dispositifs de commutation (SSB) pouvant être reliés entre eux dans le cas de plusieurs dispositifs de commutation (SSB),
**caractérisé en ce**
**que** les unités d'excitation (SES, SESX) sont reliées entre elles par le biais d'une liaison de communication en anneau (1),
**que** chaque unité d'alimentation de stator (SSD) est reliée avec la liaison de communication en anneau (1), que chaque unité d'alimentation de stator (SSD) est reliée avec le dispositif de commutation (SSB) associé par le biais d'une liaison de communication et
**que** les unités d'excitation (SESX) qui sont associées aux unités d'alimentation de stator (SSD) sont respectivement reliées avec un dispositif de commutation (SSB) par le biais d'une liaison de communication.

2. Dispositif de démarrage selon la revendication 1, **caractérisé en ce que** chaque unité d'excitation (SES) qui n'est pas reliée avec un dispositif de commutation (SSB) par le biais d'une liaison de communication présente une logique de commande, la logique de commande de l'unité d'excitation (SES) respective étant reliée avec la liaison de communication en anneau (1) et reliée avec l'unité de commande de supervision (DCS) par le biais de la liaison de communication.

3. Dispositif de démarrage selon la revendication 1 ou 2, **caractérisé en ce que** les unités d'excitation (SESX) qui sont respectivement reliées avec un dispositif de commutation (SSB) par le biais d'une liaison de communication présentent à chaque fois une logique de commande, la logique de commande de l'unité d'excitation (SESX) respective étant reliée avec la liaison de communication en anneau (1) et reliée avec l'unité de commande de supervision (DCS) par le biais de la liaison de communication et
que chaque dispositif de commutation (SSB) présente une logique de commande, la logique de commande du dispositif de commutation (SSB) respectif étant reliée avec la logique de commande de l'unité d'excitation (SESX) respective par le biais de la liaison de communication.

4. Dispositif de démarrage selon la revendication 3, **caractérisé en ce que** chaque unité d'alimentation de stator (SSD) présente une logique de commande, la logique de commande de l'unité d'alimentation de stator (SSD) respective étant reliée avec la liaison de communication en anneau (1) et
que la logique de commande du dispositif de commutation (SSB) respectif est reliée avec la logique de commande de l'unité d'alimentation de stator (SSD) respective par le biais de la liaison de communication.
